# EUROPEAN PATENT APPLICATION

(11) **EP 4 716 130 A1**
(43) Date of publication of application: **25.03.2026**
(21) Application number: 24810287.3
(22) Date of filing: 16.05.2024
(51) Int. Cl.: H04L 1/1812

(54) **HYBRID AUTOMATIC REPEAT REQUEST (HARQ) FEEDBACK METHOD AND APPARATUS, AND TERMINAL**

(30) Priority: 19.05.2023 CN 202310573582
(71) Applicant: Vivo Mobile Communication Co., Ltd., Dongguan, Guangdong 523863 (CN)
(72) Inventor: LI, Gen, Dongguan, Guangdong 523863 (CN); HONG, Qi, Dongguan, Guangdong 523863 (CN)
(74) Representative: dompatent
(86) International application number: PCT/CN2024/093576
(87) International publication number: WO 2024/240040

(57) **Abstract**

The present application belongs to the technical field of communications. Disclosed are a hybrid automatic repeat request (HARQ) feedback method and apparatus, and a terminal. The HARQ feedback method in the embodiments of the present application comprises: a terminal determining, according to first information, an HARQ feedback codebook sent on the basis of a target physical uplink control channel (PUCCH) occasion, wherein the first information comprises a non-activation time of discontinuous transmission (DTX) of a target cell or discontinuous reception (DRX) of the target cell, and the target cell comprises an access cell of the terminal.

## Description

### CROSS-REFERENCE TO RELATED APPLICATIONS

This application claims priority to Chinese Patent Application No. 202310573582.1, filed in China on May 19, 2023, which is incorporated herein by reference in its entirety.

### TECHNICAL FIELD

This application pertains to the field of communication technologies, and specifically relates to a hybrid automatic repeat request (Hybrid Automatic Repeat Request, HARQ) feedback method and apparatus, and a terminal.

### BACKGROUND

In the related art, research is performed on cell (cell) discontinuous transmission (Discontinuous Transmission, DTX) and discontinuous reception (Discontinuous Reception, DRX).

In a cell DTX/DRX mechanism, a cell may disable reception and transmission of some or all signals of a base station or turn off some base station components within an off duration (off duration) of aligned cell DTX/DRX to achieve an objective of energy saving. In this case, if a terminal performs a HARQ feedback according to a HARQ feedback solution in the related art, waste of feedback resources is caused.

### SUMMARY

Embodiments of this application provide a hybrid automatic repeat request HARQ feedback method and apparatus, and a terminal, to optimize a HARQ feedback solution in a cell DTX or DRX mechanism, reduce unnecessary HARQ feedbacks, and reduce resource waste.

According to a first aspect, a HARQ feedback method is provided, and the method includes:
determining, by a terminal based on first information, a HARQ feedback codebook to be sent based on a target physical uplink control channel PUCCH occasion, where the first information includes an inactive period of discontinuous transmission DTX in a target cell or discontinuous reception DRX in a target cell, and the target cell includes a serving cell of the terminal.

According to a second aspect, a HARQ feedback apparatus is provided and includes:
a first determining module, configured to determine, based on first information, a HARQ feedback codebook to be sent based on a target physical uplink control channel PUCCH occasion, where the first information includes an inactive period of discontinuous transmission DTX in a target cell or discontinuous reception DRX in a target cell, and the target cell includes a serving cell of the terminal.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided and includes a processor and a communication interface. The processor is configured to determine, based on first information, a HARQ feedback codebook to be sent based on a target physical uplink control channel PUCCH occasion, where the first information includes an inactive period of discontinuous transmission DTX in a target cell or discontinuous reception DRX in a target cell, and the target cell includes a serving cell of the terminal.

According to a fifth aspect, a readable storage medium is provided. The readable storage medium stores a program or instructions. When the program or instructions are executed by a processor, the steps of the method according to the first aspect are implemented.

According to a sixth aspect, a chip is provided. The chip includes a processor and a communication interface. The communication interface is coupled to the processor. The processor is configured to run a program or instructions to implement the method according to the first aspect.

According to a seventh aspect, a computer program or program product is provided. The computer program or program product is stored in a storage medium. The computer program or program product is executed by at least one processor to implement the steps of the HARQ feedback method according to the first aspect.

In the embodiments of this application, the terminal can determine, based on an inactive period of cell DTX or DRX, whether to perform a HARQ feedback. Therefore, unnecessary HARQ feedbacks in a cell (cell) DTX or DRX mechanism are reduced, and resource waste caused by unnecessary HARQ feedbacks by the terminal can be reduced.

### BRIEF DESCRIPTION OF DRAWINGS

FIG. 1 is a schematic diagram of a structure of a wireless communication system to which an embodiment of this application can be applied;
FIG. 2 is a schematic diagram of time domain positions of a DRX on duration and a DRX opportunity of UE in the related art;
FIG. 3 is a flowchart of a HARQ feedback method according to an embodiment of this application;
FIG. 4 is a schematic diagram of a structure of a HARQ feedback apparatus according to an embodiment of this application;
FIG. 5 is a schematic diagram of a structure of a communication device according to an embodiment of this application; and
FIG. 6 is a schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustrative purpose, and NR terms are used in most of the following descriptions. These technologies may also be applied to other systems than the NR system, for example, a 6th Generation (6th Generation, 6G) communication system.

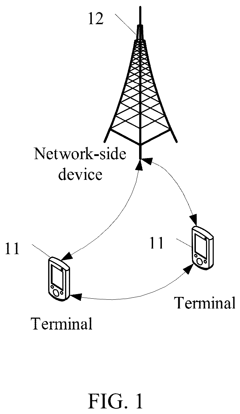

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

In the related art, a commonly used scheduling mode is dynamic scheduling, that is, a piece of downlink control information (Downlink Control Information, DCI) indicates a physical downlink shared channel (Physical downlink shared channel, PDSCH) or a physical uplink shared channel (Physical Uplink Shared Channel, PUSCH). UE first detects a piece of DCI, then receives a PDSCH or sends a PUSCH based on an indication of the DCI, and then detects a next piece of DCI.

Semi-persistent scheduling (Semi-Persistent Scheduling, SPS) is as follows: A piece of DCI or a radio resource control (Radio Resource Control, RRC) reconfiguration (reconfiguration) message may indicate several (persistent) PDSCHs or PUSCHs. Once the UE receives specific DCI or an RRC reconfiguration message, the UE starts to periodically receive a PDSCH or send a PUSCH until this persistent scheduling stops. During the persistent scheduling period, the UE does not need to detect DCI again. This is referred to as semi-persistent scheduling. Compared with dynamic scheduling, a quantity of blind detections of DCI is undoubtedly reduced. Therefore, a latency and power consumption of the UE are reduced.

To facilitate understanding of the HARQ feedback method provided in the embodiments of this application, the following first describes an SPS configuration, SPS activation and deactivation, DRX of UE in an RRC_connected state (RRC_CONNECTED), and cell DTX or DRX.

### (1) SPS configuration

SPS may be configured by using a *BWP-DownlinkDedicated* information element (Information element, IE) carried in an RRC reconfiguration message, where the configuration is a configuration at a bandwidth part (Bandwidth Part, BWP) level.

*BWP-DownlinkDedicated* includes an SPS configuration. It should be noted that a plurality of SPS processes may be activated simultaneously, that is, a plurality of SPS configurations may be configured in *sps-ConfigToAddModList,* and the plurality of SPS configurations may coexist or may even be in an active state simultaneously. Specifically, each SPS configuration may include parameters such as a number of SPS HARQ processes (*nrofHARQ-Processes*), an SPS HARQ process ID offset (*harq-ProcID-Offset*), and an SPS periodicity (periodicity).

It should be noted that the SPS configuration can only be activated by first being configured via RRC and then activated through a physical downlink control channel (Physical downlink control channel, PDCCH). A time-frequency position of an SPS feedback is carried by an indication field in DCI.

### (2) SPS activation and deactivation

(2-1) When only one SPS instance is configured, PDCCH validation (validation) for activating/deactivating the SPS instance needs to comply with the following Table 1 and Table 2.

**Table 1**

| | DCI format (0_0, 0_1, or 0_2) | DCI format (1_0, 1_2, or 4_1) | DCI format (1_1, or 4_2) |
|---|---|---|---|
| HARQ process number (HARQ process number) (if existent) | All are set to "0". | All are set to "0". | All are set to "0". |
| Redundancy version (Redundancy Version, RV) (if existent) | All are set to "0". | All are set to "0". | For enabled transport blocks, all are set to "0". |

Table 1 shows special fields in PDCCH validation for scheduling activation in a single DL SPS instance or a single UL grant type 2 when a single SPS PDSCH or UL grant type 2 configuration is provided to the UE within an active downlink (Downlink, DL) or uplink (Uplink, UL) BWP of a scheduled cell.

**Table 2**

| | DCI format (0_0, 0_1, or 0_2) | DCI format (1_0, 1_1, 1_2, 4_1, or 4_2) |
|---|---|---|
| HARQ process number (if existent) | All are set to "0". | All are set to "0". |
| RV (if existent) | All are set to "0". | All are set to "0". |
| Modulation and coding scheme (Modulation and coding scheme) | All are set to "0". | All are set to "0". |
| Frequency domain resource assignment (Frequency Domain Resource Assignment, FDRA) | For an FDRA type 2 with µ=1, all are set to "0"; otherwise, all are set to "1". | For an FDRA type 0 or dynamic switch (dynamicSwitch), all are set to "0"; or for an FDRA type 1, all are set to "1". |

Table 2 shows special fields in PDCCH validation for scheduling release in a single DL SPS instance or a single UL grant type 2 when a single SPS PDSCH or UL grant type 2 configuration is provided to the UE within an active DL or UL BWP of a scheduled cell.

(2-2) When a plurality of SPS instances are configured, the original HARQ process number field is used to indicate activation of one of the SPS instances, where the specific SPS instance depends on a value of the HARQ process number. A value of the RV complies with the following Table 3.

**Table 3**

| | DCI format (0_0, 0_1, or 0_2) | DCI format (1_0, 1_2, or 4_1) | DCI format (1_1, or 4_2) |
|---|---|---|---|
| RV (if existent) | All are set to "0". | All are set to "0". | For enabled transport blocks, all are set to "0". |

Table 3 shows special fields in PDCCH validation for scheduling activation in a single DL SPS instance or a single UL grant type 2 when a plurality of DL SPS or UL grant type 2 configurations are provided to the UE within an active DL or UL BWP of a scheduled cell.

It should be noted that when a plurality of SPS instances are configured, the original HARQ process number may also be used to indicate release (release) of one or more SPS instances. When a parameter *ConfiguredGrantConfigType2DeactivationStateList* or *sps-ConfigDeactivationStateList* is configured, it indicates release of a plurality of SPS instances. When the two parameters are not configured, it indicates release of one SPS instance, where release of a specific SPS instance is still determined based on a value of the HARQ process number. Other DCI parameters comply with the following Table 4.

**Table 4**

| | DCI format (0_0, 0_1, or 0_2) | DCI format (1_0, 1_1, 1_2, 4_1, 4_2) |
|---|---|---|
| RV (if existent) | All are set to "0". | All are set to "0". |
| Modulation and coding scheme | All are set to "1". | All are set to "1". |
| FDRA | For an FDRA type 2 with µ=1, all are set to "0"; otherwise, all are set to "1". | For an FDRA type 0 or dynamic switch, all are set to "0"; or for an FDRA type 1, all are set to "1". |

Table 4 shows special fields in PDCCH validation for scheduling release in one or more DL SPS instances or UL grant types 2 when a plurality of DL SPS or UL grant type 2 configurations are provided to the UE within an active DL or UL BWP of a scheduled cell.

### (3) DRX of UE in RRC_CONNECTED

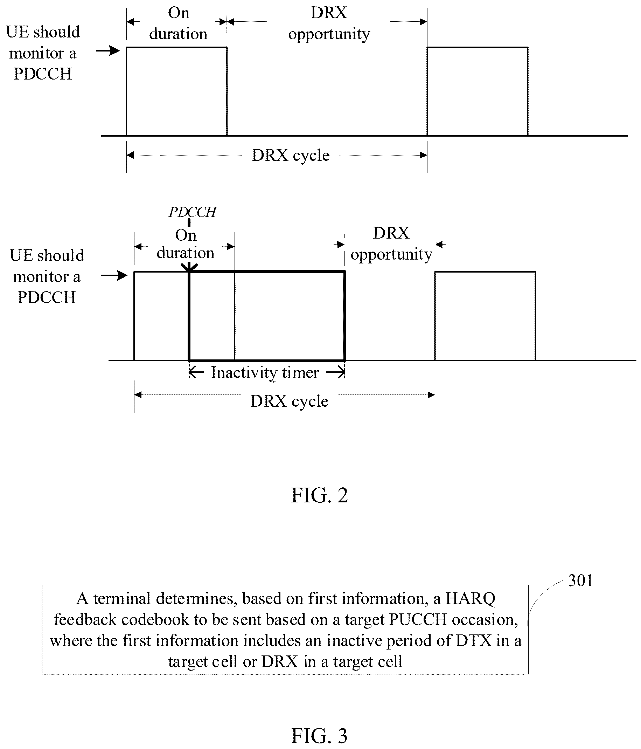

A basic DRX mechanism is to configure a DRX cycle (cycle) for UE in an RRC_CONNECTED state. As shown in FIG. 2, a DRX cycle includes an "on duration (On Duration)" and a "DRX opportunity (Opportunity for DRX)". Within the "On Duration" (configured by using *drx-onDurationTimer*), the UE monitors a PDCCH (in an active period). Within the "Opportunity for DRX", the UE does not monitor the PDCCH, to reduce power consumption (in a sleep period).

In addition, the network may further configure an inactivity timer (inactivity timer). If a newly transmitted PDCCH is received within the "On Duration", the inactivity timer is started or restarted to extend the duration for the UE to monitor the PDCCH.

As can be learned from above, the DRX mechanism reduces power consumption by reducing PDCCH monitoring by the terminal.

### (4) Cell DTX/DRX

In a work item of a network energy saving project of the 3rd Generation Partnership Project (3rd Generation Partnership Project, 3GPP) Release 18 (Rel-18), research and discussions are being performed on standardization of network energy saving based on cell DTX/DRX.

Specifically, one energy-saving method for cell DTX/DRX is to align DRX on durations of different UEs, which are staggered in time domain, to implement cell DTX/DRX. Another energy-saving method for cell DTX/DRX is to directly define a cell DTX/DRX pattern (pattern), including an on duration and an off duration. Therefore, a cell can disable reception and transmission of some or all of signals of a base station or turn off some base station components within the off duration of the aligned cell DTX/DRX to achieve an objective of energy saving.

For ease of description, in the embodiments of this application, a manner of aligning DRX on durations of different UEs that are staggered in time domain to implement cell DTX/DRX is mainly used as an example for description.

A configuration of cell DTX/DRX may be activated or deactivated by using RRC, or may be activated or deactivated by using DCI.

It should be noted that in a cell DTX/DRX mechanism, sending of an SPS PDSCH within an inactive period (inactive period) of cell DTX/DRX may be canceled. Based on this, in the cell DTX/DRX mechanism, how a terminal performs a HARQ feedback of an SPS PDSCH is a problem that needs to be resolved.

In the embodiments of this application, a HARQ feedback solution in a cell DTX/DRX mechanism is optimized, so that a terminal can determine, based on an inactive period of cell DTX, whether to perform a HARQ feedback, thereby reducing unnecessary HARQ feedbacks and resource waste.

A HARQ feedback method, a HARQ feedback apparatus, and a terminal provided in the embodiments of this application are hereinafter described in detail by using some embodiments and application scenarios thereof with reference to the accompanying drawings.

A HARQ feedback method provided in an embodiment of this application may be performed by a terminal. The terminal may be various types of terminals 11 illustrated in FIG. 1, or terminals other than terminal types listed in the embodiment shown in FIG. 1. This is not specifically limited herein.

In an embodiment, as shown in FIG. 3, the HARQ feedback method includes the following step:

Step 301: A terminal determines, based on first information, a HARQ feedback codebook to be sent based on a target physical uplink control channel (Physical Uplink Control Channel, PUCCH) occasion, where the first information includes an inactive period of discontinuous transmission DTX in a target cell or discontinuous reception DRX in a target cell, and the target cell includes a serving cell of the terminal.

In this embodiment of this application, the terminal determines, based on the inactive period of the discontinuous transmission DTX in the target cell or discontinuous reception DRX in the target cell, whether to perform a HARQ feedback. Therefore, unnecessary HARQ feedbacks in a cell (cell) DTX or DRX mechanism are reduced, and resource waste caused by unnecessary HARQ feedbacks by the terminal can be reduced.

It should be noted that the HARQ feedback codebook to be sent at the PUCCH occasion may include a HARQ feedback of at least one PDSCH. Optionally, the PDSCH may include at least one of an SPS PDSCH and a dynamic grant (Dynamic Grant, DG) PDSCH.

In some implementations, the target cell may send a PDSCH to the terminal. In the cell DTX/DRX mechanism, the target cell may cancel sending of a PDSCH within the inactive period of the cell DTX. In this case, the terminal may determine, based on the inactive period of the cell DTX of the target cell, the PDSCH whose sending is canceled, to cancel a HARQ feedback to the target cell for the PDSCH whose sending is canceled.

In some other implementations, in the cell DTX/DRX mechanism, the target cell may disable reception and transmission of some or all signals of the target cell or disable some components of the target cell within the inactive period of the cell DRX. In this case, the terminal may determine, based on the inactive period of the target cell DRX, whether the HARQ codebook fed back at the target PUCCH occasion can be received by the target cell, so as to send the HARQ codebook based on the target PUCCH occasion only in a case that the target cell can receive the HARQ codebook fed back at the target PUCCH occasion.

It should be noted that the cancellation of sending in this embodiment of this application may include: a network-side device cancels sending of a signal, or the terminal does not expect to receive a signal. In addition, if repetition (repetition) transmission is configured for the SPS PDSCH, sending of the SPS PDSCH is considered to be canceled only when all repetitions of the SPS PDSCH overlap with the inactive period of cell DTX.

In an implementation, the target PUCCH occasion may be used to provide HARQ feedbacks of at least two PDSCHs, that is, the HARQ feedback codebook may carry the HARQ feedbacks of the at least two PDSCHs. In this case, determining the HARQ feedback codebook to be sent based on the target PUCCH occasion may be determining a HARQ feedback to be carried in the HARQ feedback codebook.

For example, it is assumed that the target PUCCH occasion is used to associate and provide HARQ feedbacks of 10 PDSCHs. In this case, the HARQ feedback codebook may include 10 bits (bits) to indicate HARQ feedbacks corresponding to the PDSCHs. If sending of three PDSCHs is canceled due to overlapping with the inactive period of the target cell DRX, the HARQ feedback codebook may include HARQ feedbacks of only seven PDSCHs whose sending is not canceled. In this way, a number of bits in the HARQ feedback codebook can be reduced, and resource consumption in transmitting the HARQ feedback codebook can be reduced.

In another implementation, the target PUCCH occasion may be used to provide a HARQ feedback of one PDSCH. In this case, determining the HARQ feedback codebook to be sent based on the target PUCCH occasion may be determining whether to feed back the HARQ feedback codebook, that is, whether to provide the HARQ feedback of the PDSCH to the network-side device.

For example, assuming that the target PUCCH occasion is used to associate and provide a HARQ feedback of one PDSCH, if sending of the PDSCH is canceled due to overlapping with the inactive period of the target cell DRX, the terminal does not send the HARQ of the PDSCH to the network-side device; or if sending of the PDSCH is not canceled, the terminal sends the HARQ of the PDSCH to the network-side device.

It should be noted that there are two potential implementations for cell DTX/DRX. One is to explicitly configure cell DTX/DRX and consider how to cooperate with UE DRX. The other is to reconfigure DRX of different UEs by a base station to perform alignment in time domain. In this embodiment of this application, explicitly configuring target cell DTX/DRX is used as an example for description, which does not constitute a specific limitation herein.

In an optional implementation, the method further includes:
the terminal receives first configuration information from a network-side device, where the first configuration information is used to configure information related to the target cell DTX; and
the terminal determines the inactive period of the target cell DTX based on the first configuration information.

In an implementation, the first configuration information may be used to configure the target cell DTX. In another implementation, the first configuration information may be used to configure the target cell DTX and the target cell DRX. In other words, the cell DTX configuration and the cell DRX configuration may be configured together or separately.

Optionally, the cell DTX/DRX may be activated or deactivated by using dynamic layer 1(Layer 1, L1) signaling, such as group common-PDCCH (Group Common-PDCCH), or the cell DTX/DRX may be activated or deactivated by using layer 2 (Layer 2, L2) signaling or RRC signaling.

Optionally, the first configuration information includes at least one of the following:
a periodicity (periodicity) of the target cell DTX;
a start position (start slot) of the target cell DTX;
a time domain offset (offset) of the target cell DTX; and
an on duration (on duration) of the target cell DTX.

In this way, based on the first configuration information, the inactive period of the target cell DTX can be determined.

Certainly, in another optional implementation, the target cell may directly indicate the inactive period of the target cell DTX to the terminal, which is not described herein.

In an optional implementation, the first information further includes at least one of the following:
a type of target signaling, where the target signaling is used to activate or deactivate the target cell DTX;
a physical downlink shared channel PDSCH type to be fed back at the target PUCCH occasion;
a codebook type of the HARQ feedback codebook; and
status information about whether the target PUCCH is multiplexed with another PUCCH or a PUSCH.

In a first implementation, the target cell DTX may be activated or deactivated by using by at least one of RRC signaling, layer 2 (Layer 2, L2) signaling, and layer 1 (Layer 1, L1) signaling.

Optionally, reliability of L1 signaling is low, and in a case that the target cell DTX is activated or deactivated by using L1 signaling, the HARQ feedback may be canceled without being based on the inactive period of the target cell DTX. For example, in a case that the target cell DTX is activated by using L1 signaling, the terminal does not receive the L1 signaling, and therefore, the target cell DTX is always considered to be in an inactive state. In this case, the terminal still reports the HARQ of the PDSCH overlapping with the inactive period of the target cell DTX, so that reliability of the HARQ feedback can be improved.

Optionally, reliability of RRC signaling or L2 signaling is high, and in a case that the target cell DTX is activated or deactivated by using RRC signaling or L2 signaling, the HARQ feedback may be canceled based on the inactive period of the target cell DTX.

In a second implementation, the PDSCH type to be fed back at the target PUCCH occasion may include an SPS PDSCH, a DG PDSCH, or the like. In this case, different PDSCH types may be distinguished, so that corresponding HARQ feedback codebook determining solutions are used.

For example, in a case that the PDSCH type includes only an SPS PDSCH, the HARQ feedback codebook to be sent at the target PUCCH occasion is determined based on a first rule; or in a case that the PDSCH type includes only a DG PDSCH or includes a DG PDSCH and an SPS PDSCH, the HARQ feedback codebook to be sent at the target PUCCH occasion is determined based on a second rule, where the first rule and the second rule may be different rules for determining the HARQ feedback codebook. In this way, flexibility of HARQ feedbacks for different types of PDSCHs can be improved.

In a third implementation, there are at least two types of HARQ feedback codebooks, such as type (Type) 1 and type 2 codebooks, where different types of HARQ feedback codebooks have their own encoding rules. In this case, different HARQ feedback codebook determining solutions may be used based on respective encoding rules. In this way, applicability of the HARQ feedback codebook determining solution and the HARQ feedback codebook can be improved.

In a fourth implementation, in a case that the target PUCCH is multiplexed with another PUCCH or a PUSCH, if an error occurs during encoding or decoding of the HARQ feedback codebook sent at the target PUCCH occasion, decoding of the multiplexed other PUCCH or PUSCH is affected.

Optionally, in a case that the target PUCCH is not multiplexed with another PUCCH or a PUSCH, the HARQ feedback may be canceled based on the inactive period of the target cell DTX; however, in a case that the target PUCCH is multiplexed with another PUCCH or a PUSCH, the HARQ feedback is not canceled based on the inactive period of the target cell DTX. In this way, a decoding error probability can be reduced for the other PUCCH or PUSCH multiplexed with the target PUCCH.

It should be noted that at least two of the foregoing four implementations may be combined. To facilitate understanding, the following three scenarios are used as examples for description.

### Scenario 1

That a terminal determines, based on first information, a HARQ feedback codebook to be sent based on a target physical uplink control channel PUCCH occasion includes:
in a case that a PDSCH type to be fed back at the target PUCCH occasion is an SPS PDSCH, and that at least one SPS PDSCH overlaps with the inactive period of the target cell DTX, the terminal performs at least one of the following:
canceling a HARQ feedback corresponding to the at least one SPS PDSCH, or performing a HARQ feedback corresponding to the at least one SPS PDSCH;
canceling or performing, based on second configuration information from a network-side device, the HARQ feedback corresponding to the at least one SPS PDSCH;
canceling the HARQ feedback corresponding to the at least one SPS PDSCH in a case that a first condition is met; and
canceling a HARQ feedback corresponding to a first SPS PDSCH, where the first SPS PDSCH is an SPS PDSCH that is in the at least one SPS PDSCH and that meets a second condition.

In an implementation, in a case that a PDSCH type to be fed back at the target PUCCH occasion is an SPS PDSCH, and that at least one SPS PDSCH overlaps with the inactive period of the target cell DTX, a HARQ feedback corresponding to the SPS PDSCH overlapping with the inactive period of the target cell DTX may be directly canceled. In other words, the HARQ feedback codebook to be fed back at the target PUCCH occasion may not include the HARQ feedback of the SPS PDSCH overlapping with the inactive period of the target cell DTX, that is, the HARQ feedback codebook to be fed back at the target PUCCH occasion includes only a HARQ feedback of an SPS PDSCH not overlapping with the inactive period of the target cell DTX.

In another implementation, in a case that a PDSCH type to be fed back at the target PUCCH occasion is an SPS PDSCH, and that at least one SPS PDSCH overlaps with the inactive period of the target cell DTX, a HARQ feedback corresponding to the SPS PDSCH overlapping with the inactive period of the target cell DTX may not be canceled. In other words, the HARQ feedback codebook to be fed back at the target PUCCH occasion may include the HARQ feedback of the SPS PDSCH overlapping with the inactive period of the target cell DTX, and a HARQ feedback of an SPS PDSCH not overlapping with the inactive period of the target cell DTX.

In still another implementation, the terminal may cancel or perform, based on the second configuration information from the network-side device, a HARQ feedback of an SPS PDSCH overlapping with the inactive period of the target cell DTX. For example, the base station may flexibly configure the terminal to cancel or perform the HARQ feedback of the SPS PDSCH overlapping with the inactive period of the target cell DTX.

Optionally, the second configuration information may take effect per (Per) UE, or per serving cell (serving cell), or per SPS configuration. This is not specifically limited herein.

In yet another implementation, a HARQ feedback of an SPS PDSCH overlapping with the inactive period of the target cell DTX may be canceled only in a case that a specified condition (that is, the first condition) is met; and if the first condition is not met, the HARQ feedback of the SPS PDSCH overlapping with the inactive period of the target cell DTX is performed.

Optionally, the first condition includes at least one of the following:
the target cell DTX is activated or deactivated only by using RRC signaling or L2 signaling; in other words, in a case that the target cell DTX is activated or deactivated by using L1 signaling and the like with low reliability, the HARQ feedback of the SPS PDSCH overlapping with the inactive period of the target cell DTX may not be canceled;
sending of all SPS PDSCHs to be fed back at the target PUCCH occasion is canceled due to overlapping with the inactive period of the target cell DTX; in other words, when at least part of SPS PDSCHs to be fed back at the target PUCCH occasion do not overlap with the inactive period of the target cell DTX, HARQ feedbacks of all SPS PDSCHs to be fed back at the target PUCCH occasion may be fed back;
a HARQ feedback time corresponding to the target PUCCH occasion is within the inactive period of the target cell DRX; in this case, the target cell may not receive a signal or the target PUCCH at the target PUCCH occasion; in this case, HARQ feedbacks of all SPS PDSCHs to be fed back at the target PUCCH occasion may be canceled, or only a HARQ feedback of an SPS PDSCH to be fed back at the target PUCCH occasion and overlapping with the inactive period of the target cell DTX may be canceled;
a priority of the at least one SPS PDSCH is lower than a preset priority; in other words, for an SPS PDSCH overlapping with the inactive period of the target cell DTX, if a priority of the SPS PDSCH is higher than or equal to the preset priority, a HARQ feedback of the SPS PDSCH may be performed, or if a priority of the SPS PDSCH is lower than the preset priority, a HARQ feedback of the SPS PDSCH may be canceled; and
the target PUCCH is not multiplexed with another PUCCH or a PUSCH; in this case, canceling a HARQ feedback of an SPS PDSCH overlapping with the inactive period of the target cell DTX does not affect the other PUCCH or PUSCH; in other words, in a case that the target PUCCH is not multiplexed with the other PUCCH or PUSCH, the HARQ feedback of the SPS PDSCH overlapping with the inactive period of the target cell DTX is still performed, to prevent cancellation of the HARQ feedback of the SPS PDSCH overlapping with the inactive period of the target cell DTX from affecting the other PUCCH or PUSCH.

In another implementation, for an SPS PDSCH overlapping with the inactive period of the target cell DTX, it may be determined, based on an actual situation of the SPS PDSCH, whether the SPS PDSCH is a first SPS PDSCH whose HARQ feedback needs to be canceled, that is, only the HARQ feedback of the first SPS PDSCH that meets the second condition is canceled.

Optionally, the second condition includes at least one of the following:
cell DTX corresponding to the first SPS PDSCH is activated or deactivated only by using RRC signaling or L2 signaling;
a HARQ feedback time corresponding to the target PUCCH occasion is within the inactive period of the target cell DRX;
a priority of the first SPS PDSCH is lower than a preset priority; and
the target PUCCH is not multiplexed with another PUCCH or a PUSCH.

The cell DTX corresponding to the first SPS PDSCH may be the target cell DTX.

A difference between this implementation and the previous implementation in canceling the HARQ feedback corresponding to the at least one SPS PDSCH based on the first condition includes:
in this implementation, a granularity for determining whether the second condition is met is an SPS PDSCH; for example, assuming that three SPS PDSCH overlap with the inactive period of the target cell DTX, it is necessary to determine whether each of the three SPS PDSCHs meets the second condition; if one SPS PDSCH meets the second condition and the other two do not meet the second condition, only a HARQ feedback of the one SPS PDSCH meeting the second condition is canceled, but even if the remaining two SPS PDSCHs overlap with the inactive period of the target cell DTX, corresponding HARQ feedbacks are not canceled; however, in the foregoing implementation, all SPS PDSCHs overlapping with the inactive period of the target cell DTX are treated as a whole, and if the first condition is met, HARQ feedbacks of all the SPS PDSCHs overlapping with the inactive period of the target cell DTX are canceled.

### Scenario 2

That a terminal determines, based on first information, a HARQ feedback codebook to be sent based on a target PUCCH occasion includes:
in a case that the HARQ feedback codebook is configured as a type 1 codebook, and that a PDSCH type to be fed back at the target PUCCH occasion includes a dynamic grant DG PDSCH or includes a DG PDSCH and an SPS PDSCH, the terminal determines, based on the first information, candidate slots or PDSCH occasions in the HARQ feedback codebook, where
the candidate slots or PDSCH occasions in the HARQ feedback codebook are determined based on at least one of the following:
   determining the candidate slots or PDSCH occasions in the HARQ feedback codebook based on the inactive period of the target cell DTX;
   not excluding the candidate PDSCH occasions in the HARQ feedback codebook based on the inactive period of the target cell DTX;
   in a case that the target cell DTX is activated or deactivated only by using RRC signaling or L2 signaling, not excluding the candidate PDSCH occasions in the HARQ feedback codebook based on the inactive period of the target cell DTX; and
   in a case that the target cell DTX is activated or deactivated by using layer 1 L1 signaling, determining the candidate slots or PDSCH occasions in the HARQ feedback codebook based on the inactive period of the target cell DTX.

In this implementation, the type (type) 1 HARQ feedback codebook may include a HARQ feedback corresponding to each candidate slot or candidate PDSCH occasion. In this way, the HARQ feedback codebook can be adjusted by filtering the candidate slots or candidate PDSCH occasions.

In an implementation, the determining the candidate slots or PDSCH occasions in the HARQ feedback codebook based on the inactive period of the target cell DTX includes at least one of the following:
excluding a slot overlapping with the inactive period of the target cell DTX from the candidate slots in the HARQ feedback codebook;
excluding a PDSCH occasion overlapping with the inactive period of the target cell DTX from the candidate PDSCH occasions in the HARQ feedback codebook;
excluding a slot overlapping with a target time from the candidate slots in the HARQ feedback codebook, where the target time is a time that is within the inactive period of the target cell DTX and that meets a third condition; and
excluding a PDSCH occasion overlapping with the target time from the candidate PDSCH occasions in the HARQ feedback codebook.

Optionally, the third condition includes at least one of the following:
an interval from a target start position is more than X time units, where the target start position is a start position of the inactive period of the target cell DTX, and X is a positive integer;
a random access contention resolution timer (*ra-ContentionResolutionTimer*) does not run;
a message B response window (*msgB-ResponseWindow*) does not run;
a scheduling request (Scheduling Request, SR) is not in a pending (pending) state; and
a retransmission timer does not run.

In this implementation, even at a slot or PDSCH occasion overlapping with the inactive period of the target cell DTX, PDSCH scheduling or transmission may still be performed. In this case, a HARQ feedback corresponding to the slot or PDSCH occasion may be performed.

Within the inactive period of the target cell DTX, a target time at which PDSCH scheduling or transmission may be performed may include at least one of the following:
a time within X time units from a start position of the inactive period of the target cell DTX;
a time when the ra-ContentionResolutionTimer runs;
a time when the *msgB-ResponseWindow* runs;
a time when the SR is in the pending state; and
a time when the retransmission timer runs.

For example, the base station may schedule DG PDSCHs within the X time units. In this case, the terminal may still provide a HARQ feedback for a DG PDSCH within a target time within the X time units from the start position of the inactive period of the target cell DTX.

Optionally, a value of X may be configured by the network-side device, or reported by the terminal, or specified by a protocol and related to a configured scheduling parameter.

In another implementation, the candidate PDSCH occasions in the HARQ feedback codebook are not excluded based on the inactive period of the target cell DTX.

In this implementation, a HARQ feedback of a PDSCH overlapping with the inactive period of the target cell DTX may be performed.

In still another implementation, in a case that the target cell DTX is activated or deactivated only by using RRC signaling or L2 signaling, the candidate slots or PDSCH occasions in the HARQ feedback codebook are determined based on the inactive period of the target cell DTX.

In this implementation, in a case that the target cell DTX is activated or deactivated by using RRC signaling or L2 signaling with high reliability, based on high reliability of RRC signaling or L2 signaling, accuracy of determining the inactive period of the target cell DTX is high. Therefore, determining the candidate slots or PDSCH occasions in the HARQ feedback codebook based on the inactive period of the target cell DTX can reduce the number of bits of the HARQ feedback codebook, and further reduce resource consumption in transmitting the HARQ feedback codebook.

In yet another implementation, in a case that the target cell DTX is activated or deactivated by using layer 1 L1 signaling, the candidate PDSCH occasions in the HARQ feedback codebook are not excluded based on the inactive period of the target cell DTX.

In this implementation, in a case that the target cell DTX is activated or deactivated by using L1 signaling with low reliability, based on low reliability of L1 signaling, accuracy of determining the inactive period of the target cell DTX is low. Therefore, the candidate slots or PDSCH occasions in the HARQ feedback codebook are not determined based on the inactive period of the target cell DTX, so that reliability of the HARQ feedback can be improved.

### Scenario 3

That a terminal determines, based on first information, a HARQ feedback codebook to be sent based on a target PUCCH occasion includes:
in a case that the HARQ feedback codebook is configured as a type 2 codebook, and that PDSCH types to be fed back at the target PUCCH occasion include a DG PDSCH and an SPS PDSCH, and that at least one SPS PDSCH overlaps with the inactive period of the target cell DTX, the terminal performs at least one of the following:
canceling a HARQ feedback corresponding to the at least one SPS PDSCH, or performing a HARQ feedback corresponding to the at least one SPS PDSCH;
canceling or performing, based on third configuration information from a network-side device, the HARQ feedback corresponding to the at least one SPS PDSCH;
canceling the HARQ feedback corresponding to the at least one SPS PDSCH in a case that a fourth condition is met; and
canceling a HARQ feedback corresponding to a second SPS PDSCH, where the second SPS PDSCH is an SPS PDSCH that is in the at least one SPS PDSCH and that meets a fifth condition.

Implementations of the scenario 3 and the scenario 1 are similar, and differences include: the scenario 3 is a scenario in which a HARQ feedback codebook is configured as a type 2 codebook, a PDSCH type to be fed back at the target PUCCH occasion includes a DG PDSCH and an SPS PDSCH, and at least one SPS PDSCH overlaps with the inactive period of the target cell DTX, while the scenario 1 is a scenario in which a PDSCH type to be fed back at the target PUCCH occasion is an SPS PDSCH, and at least one SPS PDSCH overlaps with the inactive period of the target cell DTX.

In other words, for the scenario 1 and the scenario 3, the terminal may perform different operations to determine, based on the first information, the HARQ feedback codebook to be sent based on the target physical uplink control channel PUCCH occasion.

It should be noted that the third configuration information in the scenario 3 is similar to the second configuration information in the scenario 1, and is not described herein again.

Optionally, the fourth condition includes at least one of the following:
the target cell DTX is activated or deactivated only by using RRC signaling or L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

For the description of the fourth condition, refer to the description of the first condition in the scenario 1. Details are not described herein again.

Optionally, the fifth condition includes at least one of the following:
cell DTX corresponding to the second SPS PDSCH is activated or deactivated only by using RRC signaling or L2 signaling;
a HARQ feedback time corresponding to the target PUCCH occasion is within the inactive period of the target cell DRX;
a priority of the second SPS PDSCH is lower than a preset priority; and
the target PUCCH is not multiplexed with another PUCCH or a PUSCH.

For the description of the second SPS PDSCH and the fifth condition, refer to the description of the first SPS PDSCH and the second condition in the scenario 1. Details are not described herein again.

In this embodiments of this application, the terminal can determine, based on the inactive period of the cell DTX, whether to perform a HARQ feedback. Therefore, unnecessary HARQ feedbacks in the cell (cell) DTX mechanism are reduced, and resource waste caused by unnecessary HARQ feedbacks by the terminal can be reduced.

The HARQ feedback method provided in the embodiments of this application may be performed by a HARQ feedback apparatus. A HARQ feedback apparatus provided in the embodiments of this application is described by assuming that the HARQ feedback method in the embodiments of this application is performed by the HARQ feedback apparatus.

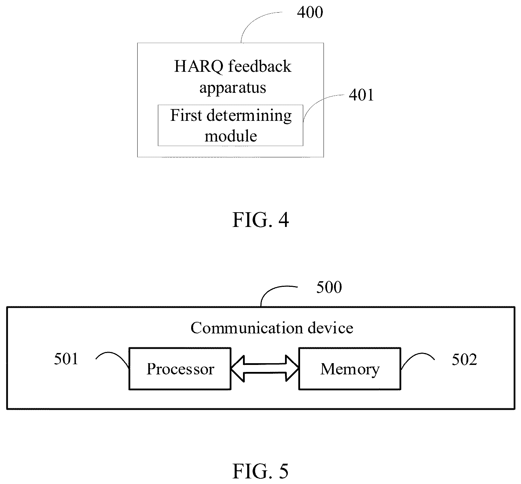

Referring to FIG. 4, a HARQ feedback apparatus 400 provided in an embodiment of this application may be an apparatus in a terminal.

As shown in FIG. 4, the HARQ feedback apparatus 400 may include the following module:
a first determining module 401, configured to determine, based on first information, a HARQ feedback codebook to be sent based on a target physical uplink control channel PUCCH occasion, where the first information includes an inactive period of discontinuous transmission DTX in a target cell or discontinuous reception DRX in a target cell, and the target cell includes a serving cell of the terminal.

Optionally, the first information further includes at least one of the following:
a type of target signaling, where the target signaling is used to activate or deactivate the target cell DTX;
a physical downlink shared channel PDSCH type to be fed back at the target PUCCH occasion;
a codebook type of the HARQ feedback codebook; and
status information about whether the target PUCCH is multiplexed with another PUCCH or a PUSCH.

Optionally, the HARQ feedback apparatus 400 further includes:
a first receiving module, configured to receive first configuration information from a network-side device, where the first configuration information is used to configure information related to the target cell DTX; and
a second determining module, configured to determine the inactive period of the target cell DTX based on the first configuration information.

Optionally, the first configuration information includes at least one of the following: a periodicity of the target cell DTX; a start position of the target cell DTX; a time domain offset of the target cell DTX; and an on duration of the target cell DTX.

Optionally, the first determining module 401 is further configured to:
in a case that a PDSCH type to be fed back at the target PUCCH occasion is a semi-persistent scheduling SPS PDSCH, and that at least one SPS PDSCH overlaps with the inactive period of the target cell DTX, perform at least one of the following:
canceling a HARQ feedback corresponding to the at least one SPS PDSCH, or performing a HARQ feedback corresponding to the at least one SPS PDSCH;
canceling or performing, based on second configuration information from a network-side device, the HARQ feedback corresponding to the at least one SPS PDSCH;
canceling the HARQ feedback corresponding to the at least one SPS PDSCH in a case that a first condition is met; and
canceling a HARQ feedback corresponding to a first SPS PDSCH, where the first SPS PDSCH is an SPS PDSCH that is in the at least one SPS PDSCH and that meets a second condition.

Optionally, the first condition includes at least one of the following:
the target cell DTX is activated or deactivated only by using radio resource control RRC signaling or layer 2 L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

Optionally, the second condition includes at least one of the following:
cell DTX corresponding to the first SPS PDSCH is activated or deactivated only by using RRC signaling or L2 signaling;
a HARQ feedback time corresponding to the target PUCCH occasion is within the inactive period of the target cell DRX;
a priority of the first SPS PDSCH is lower than a preset priority; and
the target PUCCH is not multiplexed with another PUCCH or a PUSCH.

Optionally, the first determining module 401 is further configured to:
in a case that the HARQ feedback codebook is configured as a type 1 codebook, and that a PDSCH type to be fed back at the target PUCCH occasion includes a dynamic grant DG PDSCH or includes a DG PDSCH and an SPS PDSCH, determine, by the terminal based on the first information, candidate slots or PDSCH occasions in the HARQ feedback codebook, where
the candidate slots or PDSCH occasions in the HARQ feedback codebook are determined based on at least one of the following:
   determining the candidate slots or PDSCH occasions in the HARQ feedback codebook based on the inactive period of the target cell DTX;
   not excluding the candidate PDSCH occasions in the HARQ feedback codebook based on the inactive period of the target cell DTX;
   in a case that the target cell DTX is activated or deactivated only by using RRC signaling or L2 signaling, not excluding the candidate PDSCH occasions in the HARQ feedback codebook based on the inactive period of the target cell DTX; and
   in a case that the target cell DTX is activated or deactivated by using layer 1 L1 signaling, determining the candidate slots or PDSCH occasions in the HARQ feedback codebook based on the inactive period of the target cell DTX.

Optionally, the determining the candidate slots or PDSCH occasions in the HARQ feedback codebook based on the inactive period of the target cell DTX includes at least one of the following:
excluding a slot overlapping with the inactive period of the target cell DTX from the candidate slots in the HARQ feedback codebook;
excluding a PDSCH occasion overlapping with the inactive period of the target cell DTX from the candidate PDSCH occasions in the HARQ feedback codebook;
excluding a slot overlapping with a target time from the candidate slots in the HARQ feedback codebook, where the target time is a time that is within the inactive period of the target cell DTX and that meets a third condition; and
excluding a PDSCH occasion overlapping with the target time from the candidate PDSCH occasions in the HARQ feedback codebook.

Optionally, the third condition includes at least one of the following:
an interval from a target start position is more than X time units, where the target start position is a start position of the inactive period of the target cell DTX, and X is a positive integer;
a random access contention resolution timer *ra-ContentionResolutionTimer* does not run;
a message B response window *msgB-ResponseWindow* does not run;
a scheduling request SR is not in a pending (pending) state; and
a retransmission timer does not run.

Optionally, the first determining module 401 is further configured to:
in a case that the HARQ feedback codebook is configured as a type 2 codebook, and that PDSCH types to be fed back at the target PUCCH occasion include a DG PDSCH and an SPS PDSCH, and that at least one SPS PDSCH overlaps with the inactive period of the target cell DTX, perform at least one of the following:
canceling a HARQ feedback corresponding to the at least one SPS PDSCH, or performing a HARQ feedback corresponding to the at least one SPS PDSCH;
canceling or performing, based on third configuration information from a network-side device, the HARQ feedback corresponding to the at least one SPS PDSCH;
canceling the HARQ feedback corresponding to the at least one SPS PDSCH in a case that a fourth condition is met; and
canceling a HARQ feedback corresponding to a second SPS PDSCH, where the second SPS PDSCH is an SPS PDSCH that is in the at least one SPS PDSCH and that meets a fifth condition.

Optionally, the fourth condition includes at least one of the following:
the target cell DTX is activated or deactivated only by using RRC signaling or L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

Optionally, the fifth condition includes at least one of the following:
cell DTX corresponding to the second SPS PDSCH is activated or deactivated only by using RRC signaling or L2 signaling;
a HARQ feedback time corresponding to the target PUCCH occasion is within the inactive period of the target cell DRX;
a priority of the second SPS PDSCH is lower than a preset priority; and
the target PUCCH is not multiplexed with another PUCCH or a PUSCH.

The HARQ feedback apparatus 400 in this embodiment of this application may be an electronic device, for example, an electronic device with an operating system, or may be a component in an electronic device, for example, an integrated circuit or a chip. The electronic device may be a terminal. For example, the terminal may include but is not limited to the foregoing illustrated type of the terminal 11. This is not specifically limited in this embodiment of this application.

The HARQ feedback apparatus 400 provided in this embodiment of this application can implement each process implemented in the method embodiment in FIG. 3, with the same technical effect achieved. To avoid repetition, details are not described herein again.

As shown in FIG. 5, an embodiment of this application further provides a communication device 500, including a processor 501 and a memory 502. The memory 502 stores a program or instructions capable of running on the processor 501. When the program or instructions are executed by the processor 801, the steps of the foregoing embodiment of the HARQ feedback method are implemented, with the same technical effect achieved. To avoid repetition, details are not described herein again.

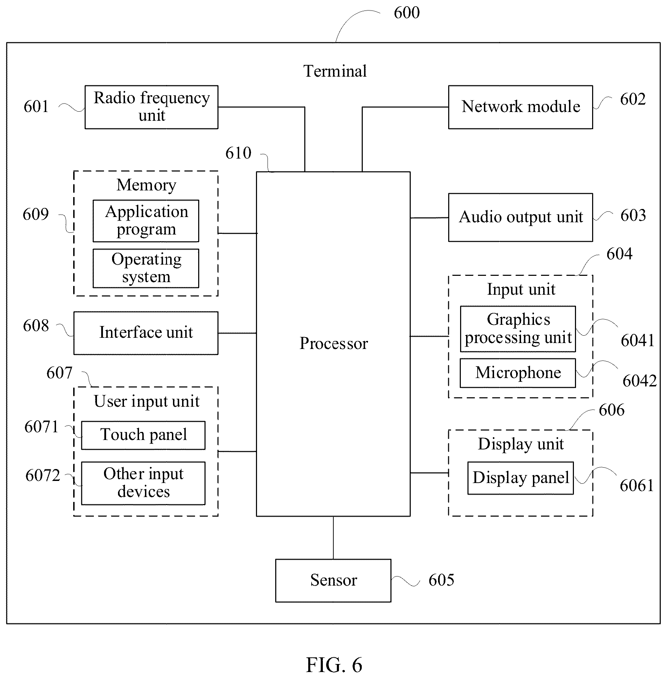

An embodiment of this application further provides a terminal, including a processor and a communication interface. The communication interface is coupled to the processor. The processor is configured to run a program or instructions to implement the steps in the method embodiment shown in FIG. 3. The terminal embodiment corresponds to the foregoing method embodiment, and each implementation process and implementation of the foregoing method embodiment can be applied to the terminal embodiment, with the same technical effect achieved. Specifically, FIG. 6 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. Optionally, the power supply may be logically connected to the processor 610 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may send uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

The processor 610 is configured to determine, based on first information, a HARQ feedback codebook to be sent based on a target physical uplink control channel PUCCH occasion, where the first information includes an inactive period of discontinuous transmission DTX in a target cell or discontinuous reception DRX in a target cell, and the target cell includes a serving cell of the terminal.

Optionally, the first information further includes at least one of the following:
a type of target signaling, where the target signaling is used to activate or deactivate the target cell DTX;
a physical downlink shared channel PDSCH type to be fed back at the target PUCCH occasion;
a codebook type of the HARQ feedback codebook; and
status information about whether the target PUCCH is multiplexed with another PUCCH or a PUSCH.

Optionally, the radio frequency unit 601 is configured to receive first configuration information from a network-side device, where the first configuration information is used to configure information related to the target cell DTX; and
the processor 610 is further configured to determine the inactive period of the target cell DTX based on the first configuration information.

Optionally, the first configuration information includes at least one of the following: a periodicity of the target cell DTX; a start position of the target cell DTX; a time domain offset of the target cell DTX; and an on duration of the target cell DTX.

Optionally, the determining, by the processor 610 based on first information, a HARQ feedback codebook to be sent based on a target physical uplink control channel PUCCH occasion includes:
in a case that a PDSCH type to be fed back at the target PUCCH occasion is a semi-persistent scheduling SPS PDSCH, and that at least one SPS PDSCH overlaps with the inactive period of the target cell DTX, performing at least one of the following:
canceling a HARQ feedback corresponding to the at least one SPS PDSCH, or performing a HARQ feedback corresponding to the at least one SPS PDSCH;
canceling or performing, based on second configuration information from a network-side device, the HARQ feedback corresponding to the at least one SPS PDSCH;
canceling the HARQ feedback corresponding to the at least one SPS PDSCH in a case that a first condition is met; and
canceling a HARQ feedback corresponding to a first SPS PDSCH, where the first SPS PDSCH is an SPS PDSCH that is in the at least one SPS PDSCH and that meets a second condition.

Optionally, the first condition includes at least one of the following:
the target cell DTX is activated or deactivated only by using radio resource control RRC signaling or layer 2 L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

Optionally, the second condition includes at least one of the following:
cell DTX corresponding to the first SPS PDSCH is activated or deactivated only by using RRC signaling or L2 signaling;
a HARQ feedback time corresponding to the target PUCCH occasion is within the inactive period of the target cell DRX;
a priority of the first SPS PDSCH is lower than a preset priority; and
the target PUCCH is not multiplexed with another PUCCH or a PUSCH.

Optionally, the determining, by the processor 610 based on first information, a HARQ feedback codebook to be sent based on a target physical uplink control channel PUCCH occasion includes:
in a case that the HARQ feedback codebook is configured as a type 1 codebook, and that a PDSCH type to be fed back at the target PUCCH occasion includes a dynamic grant DG PDSCH or includes a DG PDSCH and an SPS PDSCH, determining, based on the first information, candidate slots or PDSCH occasions in the HARQ feedback codebook, where
the candidate slots or PDSCH occasions in the HARQ feedback codebook are determined based on at least one of the following:
   determining the candidate slots or PDSCH occasions in the HARQ feedback codebook based on the inactive period of the target cell DTX;
   not excluding the candidate PDSCH occasions in the HARQ feedback codebook based on the inactive period of the target cell DTX;
   in a case that the target cell DTX is activated or deactivated only by using RRC signaling or L2 signaling, determine the candidate slot or PDSCH occasion in the HARQ feedback codebook based on the inactive period of the target cell DTX; and
   in a case that the target cell DTX is activated or deactivated by using layer 1 L1 signaling, not excluding the candidate PDSCH occasions in the HARQ feedback codebook based on the inactive period of the target cell DTX.

Optionally, the determining the candidate slots or PDSCH occasions in the HARQ feedback codebook based on the inactive period of the target cell DTX includes at least one of the following:
excluding a slot overlapping with the inactive period of the target cell DTX from the candidate slots in the HARQ feedback codebook;
excluding a PDSCH occasion overlapping with the inactive period of the target cell DTX from the candidate PDSCH occasions in the HARQ feedback codebook;
excluding a slot overlapping with a target time from the candidate slots in the HARQ feedback codebook, where the target time is a time that is within the inactive period of the target cell DTX and that meets a third condition; and
excluding a PDSCH occasion overlapping with the target time from the candidate PDSCH occasions in the HARQ feedback codebook.

Optionally, the third condition includes at least one of the following:
an interval from a target start position is more than X time units, where the target start position is a start position of the inactive period of the target cell DTX, and X is a positive integer;
a random access contention resolution timer *ra-ContentionResolutionTimer* does not run;
a message B response window *msgB-ResponseWindow* does not run;
a scheduling request SR is not in a pending (pending) state; and
a retransmission timer does not run.

The determining, by the processor 610 based on first information, a HARQ feedback codebook to be sent based on a target physical uplink control channel PUCCH occasion includes:
in a case that the HARQ feedback codebook is configured as a type 2 codebook, and that PDSCH types to be fed back at the target PUCCH occasion include a DG PDSCH and an SPS PDSCH, and that at least one SPS PDSCH overlaps with the inactive period of the target cell DTX, performing at least one of the following:
canceling a HARQ feedback corresponding to the at least one SPS PDSCH, or performing a HARQ feedback corresponding to the at least one SPS PDSCH;
canceling or performing, based on third configuration information from a network-side device, the HARQ feedback corresponding to the at least one SPS PDSCH;
canceling the HARQ feedback corresponding to the at least one SPS PDSCH in a case that a fourth condition is met; and
canceling a HARQ feedback corresponding to a second SPS PDSCH, where the second SPS PDSCH is an SPS PDSCH that is in the at least one SPS PDSCH and that meets a fifth condition.

Optionally, the fourth condition includes at least one of the following:
the target cell DTX is activated or deactivated only by using RRC signaling or L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

Optionally, the fifth condition includes at least one of the following:
cell DTX corresponding to the second SPS PDSCH is activated or deactivated only by using RRC signaling or L2 signaling;
a HARQ feedback time corresponding to the target PUCCH occasion is within the inactive period of the target cell DRX;
a priority of the second SPS PDSCH is lower than a preset priority; and
the target PUCCH is not multiplexed with another PUCCH or a PUSCH.

It may be understood that for the implementation process of each implementation mentioned in this embodiment, reference may be made to the related descriptions in the HARQ feedback method embodiment shown in FIG. 3, with the same or corresponding technical effect achieved. To avoid repetition, details are not described herein again.

An embodiment of this application further provides a readable storage medium. The readable storage medium stores a program or instructions. When the program or instructions are executed by a processor, each process of the method embodiment shown in FIG. 3 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the method embodiment shown in FIG. 3, with the same technical effect achieved. To avoid repetition, details are not described herein again. It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the method embodiment shown in FIG. 3, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the method in the foregoing embodiment can be implemented by using a computer software product in combination with a necessary general hardware platform, and certainly may alternatively be implemented by using hardware. The computer software product is stored in a storage medium (such as a ROM, a RAM, a magnetic disk, or an optical disc), and includes several instructions for instructing a terminal or a network-side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other implementations without departing from principles of this application and the protection scope of the claims, and all such implementations shall fall within the protection scope of this application.

## Claims

1. A hybrid automatic repeat request HARQ feedback method, comprising:
determining, by a terminal based on first information, a HARQ feedback codebook to be sent based on a target physical uplink control channel PUCCH occasion, wherein the first information comprises an inactive period of discontinuous transmission DTX in a target cell or discontinuous reception DRX in a target cell, and the target cell comprises a serving cell of the terminal.

2. The method according to claim 1, wherein the first information further comprises at least one of the following:
a type of target signaling, wherein the target signaling is used to activate or deactivate the target cell DTX;
a physical downlink shared channel PDSCH type to be fed back at the target PUCCH occasion;
a codebook type of the HARQ feedback codebook; and
status information about whether the target PUCCH is multiplexed with another PUCCH or a PUSCH.

3. The method according to claim 1 or 2, further comprising:
receiving, by the terminal, first configuration information from a network-side device, wherein the first configuration information is used to configure information related to the target cell DTX; and
determining, by the terminal, the inactive period of the target cell DTX based on the first configuration information.

4. The method according to claim 3, wherein the first configuration information comprises at least one of the following:
a periodicity of the target cell DTX;
a start position of the target cell DTX;
a time domain offset of the target cell DTX; and
an on duration of the target cell DTX.

5. The method according to any one of claims 1 to 4, wherein the determining, by a terminal based on first information, a HARQ feedback codebook to be sent based on a target physical uplink control channel PUCCH occasion comprises:
in a case that a PDSCH type to be fed back at the target PUCCH occasion is a semi-persistent scheduling SPS PDSCH, and that at least one SPS PDSCH overlaps with the inactive period of the target cell DTX, performing, by the terminal, at least one of the following:
canceling a HARQ feedback corresponding to the at least one SPS PDSCH, or performing a HARQ feedback corresponding to the at least one SPS PDSCH;
canceling or performing, based on second configuration information from a network-side device, the HARQ feedback corresponding to the at least one SPS PDSCH;
canceling the HARQ feedback corresponding to the at least one SPS PDSCH in a case that a first condition is met; and
canceling a HARQ feedback corresponding to a first SPS PDSCH, wherein the first SPS PDSCH is an SPS PDSCH that is in the at least one SPS PDSCH and that meets a second condition.

6. The method according to claim 5, wherein the first condition comprises at least one of the following:
the target cell DTX is activated or deactivated only by using radio resource control RRC signaling or layer 2 L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

7. The method according to claim 5, wherein the second condition comprises at least one of the following:
cell DTX corresponding to the first SPS PDSCH is activated or deactivated only by using RRC signaling or L2 signaling;
a HARQ feedback time corresponding to the target PUCCH occasion is within the inactive period of the target cell DRX;
a priority of the first SPS PDSCH is lower than a preset priority; and
the target PUCCH is not multiplexed with another PUCCH or a PUSCH.

8. The method according to any one of claims 1 to 7, wherein the determining, by a terminal based on first information, a HARQ feedback codebook to be sent based on a target physical uplink control channel PUCCH occasion comprises:
in a case that the HARQ feedback codebook is configured as a type 1 codebook, and that a PDSCH type to be fed back at the target PUCCH occasion comprises a dynamic grant DG PDSCH or comprises a DG PDSCH and an SPS PDSCH, determining, by the terminal, candidate slots or PDSCH occasions in the HARQ feedback codebook based on the first information, wherein
the candidate slots or PDSCH occasions in the HARQ feedback codebook are determined based on at least one of the following:
determining the candidate slots or PDSCH occasions in the HARQ feedback codebook based on the inactive period of the target cell DTX;
not excluding the candidate PDSCH occasions in the HARQ feedback codebook based on the inactive period of the target cell DTX;
in a case that the target cell DTX is activated or deactivated only by using RRC signaling or L2 signaling, determining the candidate slots or PDSCH occasions in the HARQ feedback codebook based on the inactive period of the target cell DTX; and
in a case that the target cell DTX is activated or deactivated by using layer 1 L1 signaling, not excluding the candidate PDSCH occasions in the HARQ feedback codebook based on the inactive period of the target cell DTX.

9. The method according to claim 8, wherein the determining the candidate slots or PDSCH occasions in the HARQ feedback codebook based on the inactive period of the target cell DTX comprises at least one of the following:
excluding a slot overlapping with the inactive period of the target cell DTX from the candidate slots in the HARQ feedback codebook;
excluding a PDSCH occasion overlapping with the inactive period of the target cell DTX from the candidate PDSCH occasions in the HARQ feedback codebook;
excluding a slot overlapping with a target time from the candidate slots in the HARQ feedback codebook, wherein the target time is a time that is within the inactive period of the target cell DTX and that meets a third condition; and
excluding a PDSCH occasion overlapping with the target time from the candidate PDSCH occasions in the HARQ feedback codebook.

10. The method according to claim 9, wherein the third condition comprises at least one of the following:
an interval from a target start position is more than X time units, wherein the target start position is a start position of the inactive period of the target cell DTX, and X is a positive integer;
a random access contention resolution timer *ra-ContentionResolutionTimer* does not run;
a message B response window *msgB-ResponseWindow* does not run;
a scheduling request SR is not in a pending (pending) state; and
a retransmission timer does not run.

11. The method according to any one of claims 1 to 10, wherein the determining, by a terminal based on first information, a HARQ feedback codebook to be sent based on a target physical uplink control channel PUCCH occasion comprises:
in a case that the HARQ feedback codebook is configured as a type 2 codebook, and that PDSCH types to be fed back at the target PUCCH occasion comprise a DG PDSCH and an SPS PDSCH, and that at least one SPS PDSCH overlaps with the inactive period of the target cell DTX, performing, by the terminal, at least one of the following:
canceling a HARQ feedback corresponding to the at least one SPS PDSCH, or performing a HARQ feedback corresponding to the at least one SPS PDSCH;
canceling or performing, based on third configuration information from a network-side device, the HARQ feedback corresponding to the at least one SPS PDSCH;
canceling the HARQ feedback corresponding to the at least one SPS PDSCH in a case that a fourth condition is met; and
canceling a HARQ feedback corresponding to a second SPS PDSCH, wherein the second SPS PDSCH is an SPS PDSCH that is in the at least one SPS PDSCH and that meets a fifth condition.

12. The method according to claim 11, wherein the fourth condition comprises at least one of the following:
the target cell DTX is activated or deactivated only by using RRC signaling or L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

13. The method according to claim 11, wherein the fifth condition comprises at least one of the following:
cell DTX corresponding to the second SPS PDSCH is activated or deactivated only by using RRC signaling or L2 signaling;
a HARQ feedback time corresponding to the target PUCCH occasion is within the inactive period of the target cell DRX;
a priority of the second SPS PDSCH is lower than a preset priority; and
the target PUCCH is not multiplexed with another PUCCH or a PUSCH.

14. A hybrid automatic repeat request HARQ feedback apparatus, comprising:
a first determining module, configured to determine, based on first information, a HARQ feedback codebook to be sent based on a target physical uplink control channel PUCCH occasion, wherein the first information comprises an inactive period of discontinuous transmission DTX in a target cell or discontinuous reception DRX in a target cell, and the target cell comprises a serving cell of the terminal.

15. The apparatus according to claim 14, wherein the first information further comprises at least one of the following:
a type of target signaling, wherein the target signaling is used to activate or deactivate the target cell DTX;
a physical downlink shared channel PDSCH type to be fed back at the target PUCCH occasion;
a codebook type of the HARQ feedback codebook; and
status information about whether the target PUCCH is multiplexed with another PUCCH or a PUSCH.

16. The apparatus according to claim 14 or 15, further comprising:
a first receiving module, configured to receive first configuration information from a network-side device, wherein the first configuration information is used to configure information related to the target cell DTX; and
a second determining module, configured to determine the inactive period of the target cell DTX based on the first configuration information.

17. The apparatus according to claim 16, wherein the first configuration information comprises at least one of the following:
a periodicity of the target cell DTX;
a start position of the target cell DTX;
a time domain offset of the target cell DTX; and
an on duration of the target cell DTX.

18. The apparatus according to any one of claims 14 to 17, wherein the first determining module is further configured to:
in a case that a PDSCH type to be fed back at the target PUCCH occasion is a semi-persistent scheduling SPS PDSCH, and that at least one SPS PDSCH overlaps with the inactive period of the target cell DTX, perform at least one of the following:
canceling a HARQ feedback corresponding to the at least one SPS PDSCH, or performing a HARQ feedback corresponding to the at least one SPS PDSCH;
canceling or performing, based on second configuration information from a network-side device, the HARQ feedback corresponding to the at least one SPS PDSCH;
canceling the HARQ feedback corresponding to the at least one SPS PDSCH in a case that a first condition is met; and
canceling a HARQ feedback corresponding to a first SPS PDSCH, wherein the first SPS PDSCH is an SPS PDSCH that is in the at least one SPS PDSCH and that meets a second condition.

19. The apparatus according to claim 18, wherein the first condition comprises at least one of the following:
the target cell DTX is activated or deactivated only by using radio resource control RRC signaling or layer 2 L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

20. The apparatus according to claim 18, wherein the second condition comprises at least one of the following:
cell DTX corresponding to the first SPS PDSCH is activated or deactivated only by using RRC signaling or L2 signaling;
a HARQ feedback time corresponding to the target PUCCH occasion is within the inactive period of the target cell DRX;
a priority of the first SPS PDSCH is lower than a preset priority; and
the target PUCCH is not multiplexed with another PUCCH or a PUSCH.

21. The apparatus according to any one of claims 14 to 20, wherein the first determining module is further configured to:
in a case that the HARQ feedback codebook is configured as a type 1 codebook, and that a PDSCH type to be fed back at the target PUCCH occasion comprises a dynamic grant DG PDSCH or comprises a DG PDSCH and an SPS PDSCH, determine, by the terminal, candidate slots or PDSCH occasions in the HARQ feedback codebook based on the first information, wherein
the candidate slots or PDSCH occasions in the HARQ feedback codebook are determined based on at least one of the following:
determining the candidate slots or PDSCH occasions in the HARQ feedback codebook based on the inactive period of the target cell DTX;
not excluding the candidate PDSCH occasions in the HARQ feedback codebook based on the inactive period of the target cell DTX;
in a case that the target cell DTX is activated or deactivated only by using RRC signaling or L2 signaling, determining the candidate slots or PDSCH occasions in the HARQ feedback codebook based on the inactive period of the target cell DTX; and
in a case that the target cell DTX is activated or deactivated by using layer 1 L1 signaling, not excluding the candidate PDSCH occasions in the HARQ feedback codebook based on the inactive period of the target cell DTX.

22. The apparatus according to claim 21, wherein the determining the candidate slots or PDSCH occasions in the HARQ feedback codebook based on the inactive period of the target cell DTX comprises at least one of the following:
excluding a slot overlapping with the inactive period of the target cell DTX from the candidate slots in the HARQ feedback codebook;
excluding a PDSCH occasion overlapping with the inactive period of the target cell DTX from the candidate PDSCH occasions in the HARQ feedback codebook;
excluding a slot overlapping with a target time from the candidate slots in the HARQ feedback codebook, wherein the target time is a time that is within the inactive period of the target cell DTX and that meets a third condition; and
excluding a PDSCH occasion overlapping with the target time from the candidate PDSCH occasions in the HARQ feedback codebook.

23. The apparatus according to claim 22, wherein the third condition comprises at least one of the following:
an interval from a target start position is more than X time units, wherein the target start position is a start position of the inactive period of the target cell DTX, and X is a positive integer;
a random access contention resolution timer *ra-ContentionResolutionTimer* does not run;
a message B response window *msgB-ResponseWindow* does not run;
a scheduling request SR is not in a pending (pending) state; and
a retransmission timer does not run.

24. The apparatus according to any one of claims 14 to 23, wherein the first determining module is further configured to:
in a case that the HARQ feedback codebook is configured as a type 2 codebook, and that PDSCH types to be fed back at the target PUCCH occasion comprise a DG PDSCH and an SPS PDSCH, and that at least one SPS PDSCH overlaps with the inactive period of the target cell DTX, perform at least one of the following:
canceling a HARQ feedback corresponding to the at least one SPS PDSCH, or performing a HARQ feedback corresponding to the at least one SPS PDSCH;
canceling or performing, based on third configuration information from a network-side device, the HARQ feedback corresponding to the at least one SPS PDSCH;
canceling the HARQ feedback corresponding to the at least one SPS PDSCH in a case that a fourth condition is met; and
canceling a HARQ feedback corresponding to a second SPS PDSCH, wherein the second SPS PDSCH is an SPS PDSCH that is in the at least one SPS PDSCH and that meets a fifth condition.

25. The apparatus according to claim 24, wherein the fourth condition comprises at least one of the following:
the target cell DTX is activated or deactivated only by using RRC signaling or L2 signaling;
sending of all SPS PDSCHs to be fed back at the target PUCCH occasion is canceled due to overlapping with the inactive period of the target cell DTX;
a HARQ feedback time corresponding to the target PUCCH occasion is within the inactive period of the target cell DRX;
a priority of the at least one SPS PDSCH is lower than a preset priority; and
the target PUCCH is not multiplexed with another PUCCH or a PUSCH.

26. The apparatus according to claim 24, wherein the fifth condition comprises at least one of the following:
cell DTX corresponding to the second SPS PDSCH is activated or deactivated only by using RRC signaling or L2 signaling;
a HARQ feedback time corresponding to the target PUCCH occasion is within the inactive period of the target cell DRX;
a priority of the second SPS PDSCH is lower than a preset priority; and
the target PUCCH is not multiplexed with another PUCCH or a PUSCH.

27. A terminal, comprising a processor and a memory, wherein the memory stores a program or instructions capable of running on the processor, and when the program or instructions are executed by the processor, the steps of the hybrid automatic repeat request HARQ feedback method according to any one of claims 1 to 13 are implemented.

28. A readable storage medium, wherein the readable storage medium stores a program or instructions, and when the program or instructions are executed by a processor, the steps of the hybrid automatic repeat request HARQ feedback method according to any one of claims 1 to 13 are implemented.
